# EUROPEAN PATENT SPECIFICATION

(11) **EP 3 058 186 B1**
(45) Date of publication and mention of the grant of the patent: **20.12.2017**
(21) Application number: 14786948.1
(22) Date of filing: 06.10.2014
(51) Int. Cl.: F01K 25/08, F01K 9/00

(54) **AN ENERGY CONVERTER AND AN ELECTRICAL TURBO-MACHINE FOR IT**
ENERGIEWANDLER UND ELEKTRISCHE STRÖMUNGSMASCHINE DAFÜR
CONVERTISSEUR D'ÉNERGIE ET SA TURBOMACHINE ÉLECTRIQUE

(30) Priority: 09.10.2013 FI 20130289
(43) Date of publication of application: 24.08.2016
(73) Proprietor: Visorc Oy, 50130 Mikkeli (FI)
(72) Inventor: HEINIMÖ, Jussi, FI-78850 Varkaus (FI); PYRHÖNEN, Juha Jaakko, FI-53850 Lappeenranta (FI); RÖYTTÄ, Pekka, 127719 Singapore (SG); TERVONEN, Hannu Helmer, deceased (FI); TURUNEN-SAARESTI, Teemu, FI-54920 Taipalsaari (FI)
(74) Representative: Finnpatent Oy
(86) International application number: PCT/FI2014/050756
(87) International publication number: WO 2015/052374

(56) References cited:
- WO-A1-82/02741
- WO-A1-93/01397
- DE-U1-202012 006 055
- FR-A1- 2 985 767
- US-A- 4 766 730

## Description

### Field of the invention

The invention relates generally to energy converters for converting thermal energy into electricity. More particularly, the invention relates to an electrical turbo-machine suitable for an energy converter that can be based on, for example but not necessarily, the Organic Rankine Cycle "ORC".

### Background

Small-size energy converters, which can be based on for example the Organic Rankine Cycle "ORC" process, can be used for converting the thermal energy of waste heat into electricity which is easily used for different purposes. The waste heat can be received from various heat-producing processes or heat-producing machines, e.g. a combustion engine or a gas turbine, where, due to the temperature of the waste heat and/or due to the circumstances of the environment, the waste heat cannot be used as such or by means of conventional heat exchangers or corresponding means.

It can be shown thermodynamically that the ORC process is an applicable technique for this kind of energy conversion. The heat of vaporization of organic working fluid is low in relation to e.g. the heat of evaporation of water, and its fall of specific enthalpy in the turbine is small and the mass flow rate in relation to the output is high, wherein it is possible to reach high turbine efficiency even in a range of small capacity. The utilization of high-speed technology, wherein the turbine is directly coupled with a generator rotating at the same speed and thus producing high-frequency current, has made it possible to further simplify the process in a way that e.g. a separate reduction gear required by conventional processes is not needed. Also, the high speed technology makes it possible to provide a hermetic process, which means significant savings in the operational expenses.

Publication EP0090022 describes an energy converter that comprises a vaporizer, i.e. a boiler, a radial turbine, a condenser, a feed pump, and a high-speed generator. The energy converter may further comprise a recuperator and a pre-feeding pump. The thermal energy supplied to the vaporizer is arranged to maintain the Organic Rankine Cycle process driving the generator and thus producing electricity. The radial turbine and the feed pump are directly connected to the rotor of the generator. The rotor is rotatably carried with gas-dynamic bearings utilizing the organic working fluid in gaseous form. The back-surface of the radial turbine is arranged to serve as one abutment surface of a gas-static thrust bearing.

Energy converters of the kind described above are, however, not free from challenges. One of the challenges is related to the fact that an energy converter of the kind described above should be hermetically sealed in order to avoid harmful leakages but, on the other hand, heat caused by power losses of the generator such as eddy current losses and hysteresis losses has to be transferred out from the hermetically sealed energy converter.

Publication WO8202741 presents a Rankine cycle energy converter that comprises a turbine, an electric generator, and a feed pump on a same shaft. The turbine, the electric generator, and the feed pump are enclosed within a hermetically sealed case. The shaft is vertically oriented with the turbine exhaust directed downwards and the shaft is supported on hydrodynamic fluid film bearings using the process fluid as lubricant and coolant.

Publication WO9301397 presents a method for improving the efficiency of a small-size power plant based on a closed, i.e. hermetic, Organic Rankine Cycle "ORC" process.

### Summary

The following presents a simplified summary in order to provide a basic understanding of some embodiments of the invention. The summary is not an extensive overview of the invention. It is neither intended to identify key or critical elements of the invention nor to delineate the scope of the invention.

In accordance with the invention, there is provided a new electrical turbo-machine that is suitable for being used, for example but not necessarily, as a high-speed turbo-generator of an Organic Rankine Cycle "ORC" energy converter. An electrical turbo-machine according to the invention comprises an electrical machine section and a turbine section. The electrical machine section comprises a stator and a rotor for magnetically interacting with the stator. The turbine section comprises a diffuser, an impeller at an end of the rotor and inside the diffuser, and a stator nozzle ring, wherein the impeller is suitable for operating as a turbine for rotating the rotor. The diffuser of the turbine section comprises a channel connected to an exhaust flow channel of the turbine section and to the gas-space of the electrical machine section so as to constitute an ejector-pump operated by the exhaust flow of the turbine section for sucking gaseous fluid from the gas-space of the electrical machine section.

In accordance with the invention, there is provided also a new energy converter that can be based on, for example but not necessarily, the Organic Rankine Cycle "ORC" process. An energy converter according to the invention comprises:
- an electrical turbo-machine according to the invention for converting energy contained by vaporized working fluid into electrical energy,
- a condenser for condensing the vaporized working fluid outputted by the electrical turbo-machine,
- a condenser tank for storing the condensed working fluid,
- a feed pump system for pumping the condensed working fluid from the condenser tank to a vaporizer, and
- a pumping system for pumping gaseous phase working fluid from the gas-space, i.e. the vapor area, of the condensation tank to flow through the generator section so as cool at least a rotor of the generator section, the pumping system comprising the ejector-pump operated by the exhaust flow of the turbine section of the electrical turbo-machine.

In an energy converter of the kind described above, the condenser is utilized not only for the thermodynamic energy conversion process but also for transferring heat caused by the power losses of the generator section out from the energy converter that is advantageously a hermetically sealed installation.

A number of non-limiting and exemplifying embodiments of the invention are described in accompanied dependent claims.

Various exemplifying embodiments of the invention both as to constructions and to operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. Furthermore, it is to be understood that the use of "a" or "an", i.e. a singular form, throughout this document does as such not exclude a plurality.

### Brief description of the figures

The exemplifying embodiments of the invention and their advantages are explained in greater detail below in the sense of examples and with reference to the accompanying drawings, in which:
figure 1a shows a section view of an electrical turbo-machine according to an exemplifying embodiment of the invention,
figure 1b shows a magnification of a detail of figure 1a, and
figure 2 shows a schematic block diagram of an energy converter according to an exemplifying embodiment of the invention.

### Description of exemplifying embodiments

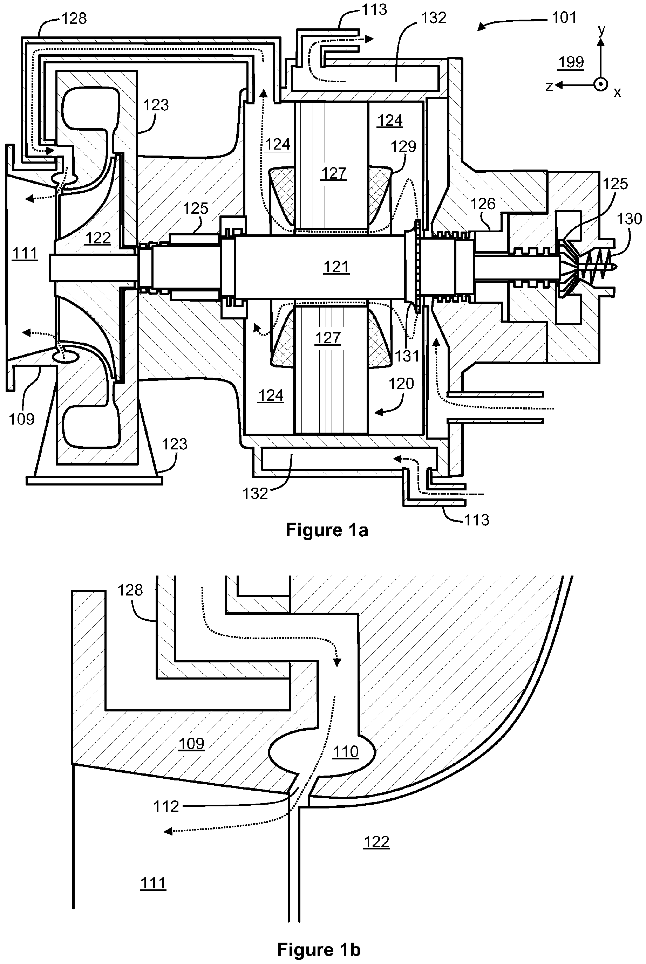

Figure 1 a shows a section view of an electrical turbo-machine 101 according to an exemplifying embodiment of the invention. The electrical turbo-machine comprises an electrical machine section that comprises a stator 120 and a rotor 121 for magnetically interacting with the stator. The rotor 121 may comprise permanent magnets for producing a magnetic flux penetrating the air-gap between the rotor and the stator. In this case, the electrical turbo-machine is capable of operating as a permanent magnet synchronous generator "PMSG". It is also possible that the rotor 121 comprises electrically conductive structures so that the electrical turbo-machine is capable of operating as an asynchronous electrical machine. The rotor is rotatably carried by bearings 125 and 126. In an exemplifying case where the electrical turbo-machine 101 is used as a turbo-generator of an Organic Rankine Cycle "ORC" energy converter, the bearings 125 and 126 are advantageously lubricated with the organic working fluid of the ORC process. The stator 120 comprises a stator core structure 127 comprising a plurality of stator teeth and stator slots. The stator core structure 127 is preferably made of steel sheets that are electrically insulated from each other and that are stacked in the direction parallel with the axial direction of the rotor 121. The axial direction is parallel with the z-direction of a coordinate system 199. The stator 120 further comprises a stator winding 129 that comprises a plurality of stator coils.

The electrical turbo-machine 101 comprises a turbine section that comprises a diffuser 109, a stator nozzle ring 123, and a first impeller 122 at a first end of the rotor 121. The stator nozzle ring 123, the impeller 122, and the diffuser 109 of the turbine section are advantageously suitable for operating as a radial turbine stage whose degree of reaction is less than 50 % e.g. 30 %. Thus, the axial height of the impeller vanes can be increased and, as a corollary, the ratio of the axial clearance to the axial height of the impeller can be made smaller, and thus the efficiency can be improved. The degree of reaction or reaction ratio is defined as the ratio of the static enthalpy drop in the impeller to the static enthalpy drop in the whole turbine stage.

The diffuser 109 of the turbine section comprises a channel 110 connected to the exhaust flow channel 111. Figure 1b shows a magnification of a detail of figure 1 a in order to illustrate how the channel 110 is connected to the exhaust flow channel 111. In the exemplifying electrical turbo-machine illustrated in figures 1 a and 1 b, the channel 110 has a toroid shape and is connected to the exhaust flow channel 111 of the turbine section with a ring shaped slit 112. The channel 110 is connected to the gas-space 124 of the electrical machine section with the aid of a pipe 128. The diffuser 109 provided with the channel 110 as described above constitutes an ejector-pump operated by the exhaust flow of the turbine section for sucking gaseous fluid from the gas-space 124 of the electrical machine section. The flow of the gaseous fluid is illustrated with dashed line arrows in figures 1a and 1b.

The flow of the gaseous fluid is suitable for cooling the electrically active parts of the electrical turbo-machine. As illustrated in figure 1a, the gaseous fluid flows through the air-gap and thus cools the rotor 121. The gaseous fluid cools also the end-windings of the stator winding.

In the exemplifying case illustrated in figures 1a and 1b, the electrical turbo-machine 101 further comprises a second impeller 125 at a second end of the rotor 121. The impeller 125 is suitable for pumping liquid and, in an exemplifying case where the electrical turbo-machine 101 is used as a turbo-generator of an Organic Rankine Cycle "ORC" energy converter, the impeller 125 can be used as a feed pump of the ORC energy converter. The impeller 125 can be a straight vane radial impeller of a "Barske"-type partial emission pump. The impeller 125 can be provided with a screw-type inducer 130 for reducing the risk of cavitation on the vanes of the impeller 125, and thereby to reduce the required pre-supply pressure. The electrical turbo-machine 101 may further comprise a third impeller 131, a fan impeller, for boosting the flow of the gaseous fluid in the gas-space 124 of the electrical machine section.

In the exemplifying case illustrated in figures 1a and 1b, the frame of electrical turbo-machine 101 comprises one or more cavities 132 and cooling ducts 113 for enabling cooling fluid circulation. Flow of the cooling fluid is denoted with dot-and-dash line arrows in figure 1a. The cooling fluid circulation is suitable for cooling especially the stator 120 of the electrical machine section.

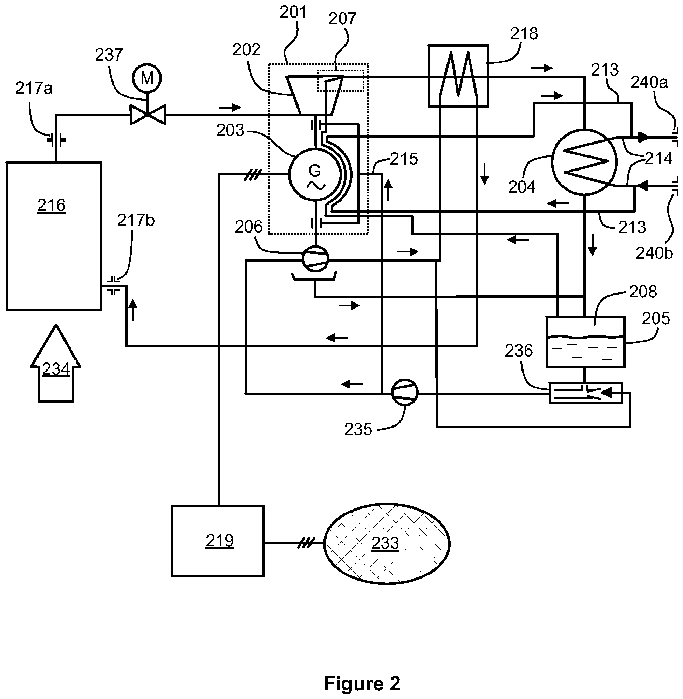

Figure 2 shows a schematic block diagram of an energy converter according to an exemplifying embodiment of the invention. The energy converter is advantageously an Organic Rankine Cycle "ORC" energy converter that uses suitable organic fluid as the working fluid. The organic fluid can be, for example but not necessarily, one of the siloxanes. It is also possible that the energy converter uses suitable non-organic fluid as the working fluid. The energy converter comprises an electrical turbo-machine 201 for converting energy contained by vaporized working fluid into electrical energy. The electrical turbo-machine 201 is advantageously a high-speed machine whose rotational speed can be as high as e.g. 10000...60000 rpm. The electrical energy outputted by the electrical turbo-machine 201 is supplied to a power grid 233 with the aid of a frequency converter 219. A vaporizer, i.e. a boiler, 216 which vaporizes the working fluid can be operated by e.g. waste heat 234 received from a heat-producing process or a heat-producing machine, e.g. a combustion engine. In the exemplifying case illustrated in figure 2, the energy converter comprises a piping interface 217a, 217b for connecting to the vaporizer 216 which is not an integral part of the energy converter but an external element. In an energy converter according to another exemplifying embodiment of the invention, the vaporizer is an integral part of the energy converter.

The electrical turbo-machine 201 comprises a generator section 203 and a turbine section 202. A feed pump 206 for pumping the working fluid to the vaporizer 216 is integrated with the electrical turbo-machine 201. The generator section 203 comprises a stator and a rotor for magnetically interacting with the stator. The rotor of the generator section may comprise permanent magnets for producing a magnetic flux penetrating the air-gap between the rotor and the stator. In this case, the generator section is capable of operating as a permanent magnet synchronous generator "PMSG". It is also possible that the rotor comprises electrically conductive structures so that the generator section is capable of operating as an asynchronous generator. The turbine section 202 comprises a diffuser, a stator nozzle ring, and a first impeller suitable for operating as a turbine for rotating the rotor of the generator section. The feed pump 206 comprises a second impeller for pumping the working fluid. In the exemplifying energy converter illustrated in figure 2, the first and second impellers are directly coupled to the rotor of the generator section.

The energy converter comprises a condenser 204 for condensing the vaporized working fluid outputted by the electrical turbo-machine 201 and a condenser tank 205 for storing the condensed working fluid. The energy converter comprises a feed pump system for pumping the condensed working fluid from the condenser tank 205 to the vaporizer 216. In the exemplifying energy converter illustrated in figure 2, the feed pump system comprises the above-mentioned feed pump 206, a pre-feed pump 235, and an ejector-pump 236 for supplying the pre-feed pump and operated by the output flow of the feed pump 206.

The energy converter comprises a pumping system 207 for pumping gaseous phase working fluid from the gas-space 208 of the condensation tank to flow through the generator section so as cool at least the rotor of the generator section. Therefore, the condenser 204 is utilized not only for the thermodynamic energy conversion process but also for transferring heat caused by the power losses of the generator section 203 out from the energy converter that is advantageously a hermetically sealed installation. The electrical turbo-machine 201 can be for example such as illustrated in figures 1a and 1b. In this case, the diffuser of the turbine section 202 comprises a channel connected to an exhaust flow channel of the turbine section so as to constitute an ejector-pump operated by exhaust flow of the turbine section for sucking the gaseous phase working fluid from the gas-space 208 of the condensation tank 205 through the generator section 203. The above-mentioned ejector-pump constitutes at least a part of the pumping system for pumping the gaseous phase working fluid through the generator section 203. The pumping system may further comprise additional means for boosting the flow of the gaseous phase working fluid through the generator section 203. The impeller 131 shown in figure 1 a represents an example of such additional means.

In the exemplifying case illustrated in figure 2, the energy converter comprises ducts 215 for conducting the working fluid to the bearings of the electrical turbo-machine 201 so as to lubricate the bearings with the working fluid.

The exemplifying energy converter illustrated in figure 2 comprises a recuperator 218 for increasing the efficiency of the energy conversion. The recuperator is a heat exchanging element arranged to transfer heat energy from the vaporized working fluid outputted by the electrical turbo-machine 201 to the condensed working fluid outputted by the feed pump 206 and being supplied to the vaporizer 216.

The exemplifying energy converter illustrated in figure 2 further comprises first cooling ducts 213 for conducting cooling fluid, e.g. water, to and from the electrical turbo-machine 201 and second cooling ducts 214 for conducting cooling fluid to and from the condenser 204. As illustrated in figure 2, the first and second cooling ducts constitute mutually parallel flowing paths for the cooling fluid. The first and second cooling ducts can be connected to an external cooling fluid circulation system with the aid of a piping interface 240a, 240b.

The above-described cooling arrangement where the rotor of the generator section 203 and the end-windings of the stator of the generator section are mainly cooled with the gaseous phase working fluid taken from the gas-space 208 of the condensation tank 205 and the stator of the generator section is mainly cooled with the cooling fluid, e.g. water, taken from the same circulation as the cooling fluid for the condenser 204 is not the only possible cooling arrangement. For example, it is also possible that the generator section 203 is cooled merely with the gaseous phase working fluid taken from the gas-space 208 of the condensation tank 205.

Furthermore, the exemplifying energy converter illustrated in figure 2 comprises a turbine valve 237 and possibly other control and/or safety instrumentation.

The specific examples provided in the description given above should not be construed as limiting. Therefore, the invention is not limited merely to the embodiments described above.

## Claims

1. An electrical turbo-machine (101) comprising an electrical machine section and a turbine section, the electrical machine section comprising a stator (120) and a rotor (121) for magnetically interacting with the stator, and the turbine section comprising a diffuser (109), a first impeller (122) at a first end of the rotor and inside the diffuser, and a stator nozzle ring (123), wherein the first impeller is suitable for operating as a turbine for rotating the rotor, **characterized in that** the diffuser of the turbine section comprises a channel (110) connected to an exhaust flow channel (111) of the turbine section and to a gas-space (124) of the electrical machine section so as to constitute an ejector-pump operated by exhaust flow of the turbine section for sucking gaseous fluid from the gas-space of the electrical machine section.

2. An electrical turbo-machine according to claim 1, wherein the channel (110) has a toroid shape and is connected to the exhaust flow channel of the turbine section with a ring shaped slit (112).

3. An electrical turbo-machine according to claim 1 or 2, wherein the electrical turbo-machine further comprises a second impeller (125) at a second end of the rotor, the second impeller being suitable for pumping liquid.

4. An electrical turbo-machine according to any of claims 1-3, wherein the rotor (121) comprises permanent magnets for producing a magnetic flux penetrating an air-gap between the rotor and the stator.

5. An energy converter comprising:
- an electrical turbo-machine (101, 201) according to any of claims 1-4 arranged to convert energy contained by vaporized working fluid into electrical energy,
- a condenser (204) arranged to condense the vaporized working fluid outputted by the electrical turbo-machine,
- a condenser tank (205) arranged to store the condensed working fluid,
- a feed pump system (206, 235, 236) arranged to pump the condensed working fluid from the condenser tank to a vaporizer, and
- a pumping system (207) arranged to pump gaseous phase working fluid from a gas-space (208) of the condensation tank to flow through the generator section so as cool at least a rotor of the generator section, the pumping system comprising the ejector-pump operated by the exhaust flow of the turbine section of the electrical turbo-machine.

6. An energy converter according to claim 5, wherein the energy converter comprises:
- first cooling ducts (113, 213) arranged to conduct cooling fluid to and from the generator section so as to cool at least a stator of the generator section, and
- second cooling ducts (214) arranged conduct the cooling fluid to and from the condenser, the first and second cooling ducts constituting mutually parallel flowing paths for the cooling fluid.

7. An energy converter according to claim 5 or 6, wherein the energy converter comprises ducts (215) arranged to conduct the working fluid to bearings of the electrical turbo-machine so as to lubricate the bearings of the electrical turbo-machine with the working fluid.

8. An energy converter according to any of claims 5-7, wherein the electrical turbo-machine comprises a hermetic casing arranged to prevent the working fluid from leaking to ambient air and to prevent the ambient air from leaking to an energy conversion process run by the energy converter.

9. An energy converter according to any of claims 5-8, wherein the energy converter further comprises the vaporizer (216).

10. An energy converter according to any of claims 5-8, wherein the energy converter comprises a piping interface (217a, 217b) for connecting to the vaporizer.

11. An energy converter according to any of claims 5-10, wherein the energy converter further comprises a recuperator (218) arranged to transfer heat energy from the vaporized working fluid outputted by the electrical turbo-machine to the condensed working fluid outputted by the feed pump.

12. An energy converter according to any of claims 5-11, wherein the energy converter further comprises a frequency converter (219) arranged supply the electrical energy outputted by the electrical turbo-machine to an external electrical system.

## Patentansprüche

1. Elektrische Turbomaschine (101), umfassend einen Elektrische-Maschine-Abschnitt und einen Turbinenabschnitt, wobei der Elektrische-Maschine-Abschnitt einen Stator (120) und einen Rotor (121) zum magnetischen Zusammenwirken mit dem Stator umfasst und der Turbinenabschnitt einen Diffusor (109), einen ersten Impeller (122) an einem ersten Ende des Rotors und innerhalb der Diffusors und einen Statordüsenring (123) umfasst, wobei der erste Impeller dafür geeignet ist, als eine Turbine zum Drehen des Rotors zu arbeiten, **dadurch gekennzeichnet, dass** der Diffusor des Turbinenabschnitts einen Kanal (110) umfasst, welcher derart mit einem Abgasstromkanal (111) des Turbinenabschnitts und einem Gasraum (124) des Elektrische-Maschine-Abschnitts verbunden ist, dass er eine durch einen Abgasstrom des Turbinenabschnitts betriebene Ejektorpumpe zum Absaugen gasförmigen Fluides aus dem Gasraum des Elektrische-Maschine-Abschnitts ausmacht.

2. Elektrische Turbomaschine nach Anspruch 1, wobei der Kanal (110) eine Toroidform aufweist und mit einem ringförmigen Schlitz (112) mit dem Abgasstromkanal des Turbinenabschnitts verbunden ist.

3. Elektrische Turbomaschine nach Anspruch 1 oder 2, wobei die elektrische Turbomaschine ferner einen zweiten Impeller (125) an einem zweiten Ende des Rotors umfasst, wobei der zweite Impeller zum Pumpen von Flüssigkeit geeignet ist.

4. Elektrische Turbomaschine nach einem der Ansprüche 1-3, wobei der Rotor (121) Permanentmagnete zum Erzeugen eines magnetischen Flusses umfasst, welcher einen Luftspalt zwischen dem Rotor und dem Stator durchdringt.

5. Energiewandler, umfassend:
- eine elektrische Turbomaschine (101, 201) nach einem der Ansprüche 1-4, welche dazu eingerichtet ist, in verdampftem Arbeitsfluid enthaltene Energie in elektrische Energie umzuwandeln,
- einen Kondensator (204), welcher dazu eingerichtet ist, das von der elektrischen Turbomaschine ausgegebene verdampfte Arbeitsfluid zu kondensieren,
- einen Kondensatorbehälter (205), welcher dazu eingerichtet ist, das kondensierte Arbeitsfluid zu speichern,
- ein Zuführpumpensystem (206, 235, 236), welches dazu eingerichtet ist, das kondensierte Arbeitsfluid von dem Kondensatorbehälter zu einem Verdampfer zu pumpen, und
- ein Pumpensystem (207), welches dazu eingerichtet ist, Arbeitsfluid in einer gasförmigen Phase aus einem Gasraum (208) des Kondensationsbehälters zu pumpen, um durch den Generatorabschnitt zu strömen, um wenigstens einen Rotor des Generatorabschnitts zu kühlen, wobei das Pumpensystem die durch den Abgasstrom des Turbinenabschnitts der elektrischen Turbomaschine betriebene Ejektorpumpe umfasst.

6. Energiewandler nach Anspruch 5, wobei der Energiewandler umfasst:
- erste Kühlleitungen (113, 213), welche dazu eingerichtet sind, Kühlfluid zu und von dem Generatorabschnitt zu leiten, um wenigstens einen Stator des Generatorabschnitts zu kühlen, und
- zweite Kühlleitungen (214), welche dazu eingerichtet sind, das Kühlfluid zu und von dem Kondensator zu leiten, wobei die erste und die zweite Kühlleitung zueinander parallele Strömungspfade für das Kühlfluid ausmachen.

7. Energiewandler nach Anspruch 5 oder 6, wobei der Energiewandler Leitungen (215) umfasst, welche dazu eingerichtet sind, das Arbeitsfluid zu Lagern der elektrischen Turbomaschine zu leiten, um die Lager der elektrischen Turbomaschine mit dem Arbeitsfluid zu schmieren.

8. Energiewandler nach einem der Ansprüche 5-7, wobei die elektrische Turbomaschine ein hermetisches Gehäuse umfasst, welches dazu eingerichtet ist, zu verhindern, dass das Arbeitsfluid zu einer Umgebungsluft durchtritt, und zu verhindern, dass die Umgebungsluft zu einem durch den Energiewandler durchgeführten Energieumwandlungsprozess durchtritt.

9. Energiewandler nach einem der Ansprüche 5-8, wobei der Energiewandler ferner den Verdampfer (216) umfasst.

10. Energiewandler nach einem der Ansprüche 5-8, wobei der Energiewandler eine Rohrleitungsschnittstelle (217a, 217b) zur Verbindung mit dem Verdampfer umfasst.

11. Energiewandler nach einem der Ansprüche 5-10, wobei der Energiewandler ferner einen Rekuperator (218) umfasst, welcher dazu eingerichtet ist, Wärmeenergie von dem von der elektrischen Turbomaschine ausgegebenen verdampften Arbeitsfluid zu dem von der Zuführpumpe ausgegebenen kondensierten Arbeitsfluid zu übertragen.

12. Energiewandler nach einem der Ansprüche 5-11, wobei der Energiewandler ferner einen Frequenzwandler (219) umfasst, welcher dazu eingerichtet ist, die von der elektrischen Turbomaschine ausgegebene elektrische Energie einem externen elektrischen System zuzuführen.

## Revendications

1. Machine à turbine électrique (101) comprenant une section de machine électrique et une section de turbine, la section de machine électrique comprenant un stator (120) et un rotor (121) pour interagir magnétiquement avec le stator, et la section de turbine comprenant un diffuseur (109), une première hélice (122) à une première extrémité du rotor et à l'intérieur du diffuseur, et une bague de buse de stator (123), la première hélice étant appropriée pour fonctionner en turbine pour faire tourner le rotor, **caractérisée en ce que** le diffuseur de la section de turbine comprend un canal (110) relié à un canal d'écoulement d'échappement (111) de la section de turbine et à un espace de gaz (124) de la section de machine électrique de façon à constituer une pompe d'éjecteur actionnée par un écoulement d'échappement de la section de turbine pour aspirer un fluide gazeux à partir de l'espace de gaz de la section de machine électrique.

2. Machine à turbine électrique selon la revendication 1, dans laquelle le canal (110) a une forme toroïdale et est relié au canal d'écoulement d'échappement de la section de turbine avec une fente de forme annulaire (112).

3. Machine à turbine électrique selon la revendication 1 ou 2, dans laquelle la machine à turbine électrique comprend de plus une deuxième hélice (125) à une deuxième extrémité du rotor, la deuxième hélice étant appropriée pour pomper un liquide.

4. Machine à turbine électrique selon l'une quelconque des revendications 1 à 3, dans laquelle le rotor (121) comprend des aimants permanents pour produire un flux magnétique pénétrant dans un entrefer à air entre le rotor et le stator.

5. Convertisseur d'énergie, comprenant :
- une machine à turbine électrique (101, 201) selon l'une quelconque des revendications 1 à 4, configurée de façon à convertir une énergie contenue par un fluide de travail vaporisé en énergie électrique,
- un condenseur (204) configuré de façon à condenser le fluide de travail vaporisé délivré en sortie par la machine à turbine électrique,
- un réservoir de condenseur (205) configuré de façon à stocker le fluide de travail condensé,
- un système de pompe d'alimentation (206, 235, 236) configuré de façon à pomper le fluide de travail condensé du réservoir de condenseur à un vaporiseur, et
- un système de pompage (207) configuré de façon à pomper un fluide de travail en phase gazeuse à partir d'un espace de gaz (208) du réservoir de condensation de façon à ce qu'il s'écoule à travers la section de générateur de façon à refroidir au moins un rotor de la section de générateur, le système de pompage comprenant la pompe d'éjecteur actionnée par l'écoulement d'échappement de la section de turbine de la machine à turbine électrique.

6. Convertisseur d'énergie selon la revendication 5, dans lequel le convertisseur d'énergie comprend :
- des premiers conduits de refroidissement (113, 213) configurés de façon à acheminer un fluide de refroidissement vers et à partir de la section de générateur de façon à refroidir au moins un stator de la section de générateur, et
- des deuxièmes conduits de refroidissement (214) configurés de façon à acheminer le fluide de refroidissement vers et à partir du condenseur, les premiers et deuxièmes conduits de refroidissement constituant des trajets d'écoulement mutuellement parallèles pour le fluide de refroidissement.

7. Convertisseur d'énergie selon la revendication 5 ou 6, dans lequel le convertisseur d'énergie comprend des conduits (215) configurés de façon à acheminer le fluide de travail vers des paliers de la machine à turbine électrique, de façon à lubrifier les paliers de la machine à turbine électrique avec le fluide de travail.

8. Convertisseur d'énergie selon l'une quelconque des revendications 5 à 7, dans lequel la machine à turbine électrique comprend un carter hermétique configuré de façon à empêcher le fluide de travail de fuir vers l'air ambiant et à empêcher l'air ambiant de fuir vers un processus de conversion d'énergie réalisé par le convertisseur d'énergie.

9. Convertisseur d'énergie selon l'une quelconque des revendications 5 à 8, dans lequel le convertisseur d'énergie comprend de plus le vaporiseur (216).

10. Convertisseur d'énergie selon l'une quelconque des revendications 5 à 8, dans lequel le convertisseur d'énergie comprend une interface de tubulure (217a, 217b) pour une liaison avec le vaporiseur.

11. Convertisseur d'énergie selon l'une quelconque des revendications 5 à 10, dans lequel le convertisseur d'énergie comprend de plus un récupérateur (218) configuré de façon à transférer de l'énergie thermique du fluide de travail vaporisé délivré en sortie par la machine à turbine électrique au fluide de travail condensé délivré en sortie par la pompe d'alimentation.

12. Convertisseur d'énergie selon l'une quelconque des revendications 5 à 11, dans lequel le convertisseur d'énergie comprend de plus un convertisseur de fréquence (219) configuré de façon à délivrer l'énergie électrique délivrée en sortie par la machine à turbine électrique à un système électrique externe.
